# EUROPEAN PATENT APPLICATION

(11) **EP 4 708 159 A1**
(43) Date of publication of application: **11.03.2026**
(21) Application number: 24909200.8
(22) Date of filing: 27.11.2024
(51) Int. Cl.: G06Q 10/02

(54) **CHARGING RESERVATION METHOD AND SYSTEM**

(30) Priority: 09.07.2024 CN 202410912770
(71) Applicant: Contemporary Amperex Technology Co., Limited, Ningde, Fujian 352100 (CN); Contemporary Amperex Future Energy Technology (Shenzhen) Limited, Shenzhen, Guangdong 518100 (CN)
(72) Inventor: XU, Jinmei, Ningde, Fujian 352100 (CN); ZHENG, Zhimin, Ningde, Fujian 352100 (CN); CHENG, Yong, Ningde, Fujian 352100 (CN)
(74) Representative: Ran, Handong
(86) International application number: PCT/CN2024/134897
(87) International publication number: WO 2026/011652

(57) **Abstract**

The embodiments of the present application provide a charging reservation method and system, where the charging reservation method includes: an in-vehicle system, in response to a charging request, acquiring at least two energy storage apparatuses for power supply that meet a charging condition and power supply status of each energy storage apparatus for power supply; the in-vehicle system determining a power supply priority of each energy storage apparatus for power supply based on a selection priority and an occupancy situation of each energy storage apparatus for power supply, where the occupancy situation is determined based on current reservation status of each energy storage apparatus for power supply; the in-vehicle system determining a target energy storage apparatus from among the at least two energy storage apparatuses for power supply based on the power supply priority and driving information for the vehicle to be charged to drive to each energy storage apparatus for power supply, and sending charging reservation information to the target energy storage apparatus; and the target energy storage apparatus, in response to the charging reservation information, updating current reservation status corresponding to the target energy storage apparatus to enable a charging reservation of the vehicle to be charged.

## Description

### CROSS-REFERENCE TO RELATED APPLICATIONS

The present disclosure is filed based on and claims priority to Chinese patent application No. 202410912770.7, filed on July 9, 2024 and entitled "CHARGING RESERVATION METHOD AND SYSTEM", which is incorporated herein by reference in its entirety.

### TECHNICAL FIELD

Embodiments of the present application relate to the field of battery technologies, and relate to but are not limited to a charging reservation method and system.

### BACKGROUND

In recent years, the world has been facing significant challenges in sustainable development, such as energy shortages, climate changes, and pollutant emissions. As a result, countries have increasingly focused on the development of new energy vehicles, represented by electric vehicles. However, the development of electric vehicles is also affected by a series of constraint factors, among which range anxiety is considered one of the primary obstacles to the widespread adoption of all-electric vehicles. Compared to the attributes of traditional automotive transportation, electric vehicles have a higher dependence on charging systems.

Existing users often encounter situations where their vehicles fail to reach the destinations smoothly due to failure to charge in time, or problems of breakdowns due to lack of power during travel on urban roads. However, due to the low popularity of charging piles, combined with the high number of electric vehicles in cities, there are problems that charging pile locations are insufficient and often occupied, preventing the vehicles from being charged in a timely manner.

### SUMMARY OF THE INVENTION

In order to address the problems existing in the related art, embodiments of the present application provide a charging reservation method and system capable of determining a target energy storage apparatus based on the location of a vehicle to be charged, and making a reservation for the target energy storage apparatus in time to replenish energy to the vehicle.

In a first aspect, the present application provides a charging reservation method applied to a charging reservation system including an in-vehicle system of a vehicle to be charged, a plurality of energy storage apparatuses, and a cloud platform connected to the plurality of energy storage apparatuses, the charging reservation method including: the in-vehicle system, in response to a charging request, acquiring at least two energy storage apparatuses for power supply that meet a charging condition and power supply status of each energy storage apparatus for power supply, where the at least two energy storage apparatuses for power supply are determined by the cloud platform from among the plurality of energy storage apparatuses based on a current location of the vehicle to be charged; and the power supply status includes current reservation status and a power supply type of each energy storage apparatus for power supply, the power supply type including ultra-fast charging, fast charging, and slow charging, with energy storage apparatuses for power supply corresponding to different power supply types having different selection priorities; the in-vehicle system determining a power supply priority of each energy storage apparatus for power supply based on a selection priority and an occupancy situation of each energy storage apparatus for power supply, where the occupancy situation is determined based on the current reservation status of each energy storage apparatus for power supply; the in-vehicle system determining a target energy storage apparatus from among the at least two energy storage apparatuses for power supply based on the power supply priority and driving information for the vehicle to be charged to drive to each energy storage apparatus for power supply, and sending charging reservation information to the target energy storage apparatus; and the target energy storage apparatus, in response to the charging reservation information, updating current reservation status corresponding to the target energy storage apparatus to enable a charging reservation of the vehicle to be charged.

In the above embodiment, the target energy storage apparatus for charging the vehicle is determined based on the selection priority and the occupancy situation of each energy storage apparatus for power supply that meets the charging condition and the driving information of the vehicle, and a reservation is then made for the target energy storage apparatus. This not only allows the target energy storage apparatus for charging the vehicle to meet the needs of the vehicle to be charged, but also prevents the target energy storage apparatus from being occupied by other vehicles while the vehicle is driving to the target energy storage apparatus. As a result, the success rate of charging for the vehicle to be charged is increased, and the time spent driving around to find an available charging pile is reduced, thereby enhancing the charging efficiency of the vehicle to be charged.

In some embodiments, the power supply status further includes a power supply location of each energy storage apparatus for power supply, and the in-vehicle system determining a target energy storage apparatus from among the at least two energy storage apparatuses for power supply based on the power supply priority and driving information for the vehicle to be charged to drive to each energy storage apparatus for power supply includes: determining road condition information of a power supply route and driving time for the vehicle to be charged to drive to each energy storage apparatus for power supply based on the current location of the vehicle to be charged and the power supply location of each energy storage apparatus for power supply; and determining the target energy storage apparatus from among the at least two energy storage apparatuses for power supply by combining the power supply priority of each energy storage apparatus for power supply, and the driving time and the road condition information of each power supply route for the vehicle to be charged to drive to each energy storage apparatus for power supply.

In the above embodiment, based on the drivable time of the vehicle, the driving route to each energy storage apparatus for power supply, and the road condition of each driving route, an energy storage apparatus for power supply that enables power supply with the shortest time and the maximum charging power is selected to charge the vehicle to be charged.

In some embodiments, the occupancy situation includes whether the energy storage apparatus for power supply is currently occupied and an available charging reservation moment of each energy storage apparatus for power supply when it is currently occupied; and the selection priorities of the energy storage apparatuses for power supply decrease sequentially in the order of ultra-fast charging, fast charging, and slow charging; and the in-vehicle system determining a power supply priority of each energy storage apparatus for power supply based on a selection priority and an occupancy situation of each energy storage apparatus for power supply includes: determining, in response to the presence of an ultra-fast charging energy storage apparatus for power supply among the at least two energy storage apparatuses for power supply and the ultra-fast charging energy storage apparatus for power supply being currently unoccupied, a power supply priority of the ultra-fast charging energy storage apparatus for power supply as level one; determining, in response to the presence of an ultra-fast charging energy storage apparatus for power supply among the at least two energy storage apparatuses for power supply and the ultra-fast charging energy storage apparatus for power supply being currently occupied, a driving moment when the vehicle to be charged drives to the ultra-fast charging energy storage apparatus for power supply based on a power supply location of the ultra-fast charging energy storage apparatus for power supply; and determining, in response to the driving moment being greater than the available charging reservation moment, a power supply priority of the ultra-fast charging energy storage apparatus for power supply as level one.

In the above embodiment, not only unoccupied charging piles are considered, but also the driving time of the vehicle and the end time of occupied charging piles are taken into account. This enables the consideration of more ultra-fast charging energy storage apparatuses for power supply for charging, thereby improving the charging efficiency. In some embodiments, the method further includes: in response to the absence of an ultra-fast charging energy storage apparatus for power supply among the at least two energy storage apparatuses for power supply, determining a power supply priority of a currently unoccupied fast charging energy storage apparatus for power supply as level two, and determining a power supply priority of a currently unoccupied slow charging energy storage apparatus for power supply as level three.

In the above embodiment, based on the power supply types of energy storage apparatuses, an ultra-fast charging energy storage apparatus for power supply is preferentially selected for the vehicle to be charged. However, when no ultra-fast charging energy storage apparatus for power supply is available, an energy storage apparatus that supply power faster is provided for the vehicle based on the power supply type to enhance the charging efficiency.

In some embodiments, the determining the target energy storage apparatus from among the at least two energy storage apparatuses for power supply by combining the power supply priority of each energy storage apparatus for power supply, and the driving time and the road condition information of each power supply route for the vehicle to be charged to drive to each energy storage apparatus for power supply includes: comparing, in response to the presence of not less than two energy storage apparatuses for power supply with a power supply priority of level one among the at least two energy storage apparatuses for power supply, drivable time of the vehicle to be charged with driving time for the vehicle to be charged to drive to the energy storage apparatuses for power supply with a power supply priority of level one to obtain a comparison result; determining, in response to the comparison result indicating the presence of at least two energy storage apparatuses for power supply with a power supply priority of level one that have driving time less than the drivable time, an energy storage apparatus for power supply with a power supply priority of level one that has the shortest driving time as the target energy storage apparatus, in conjunction with the road condition information; and determining, in response to the presence of one energy storage apparatus for power supply with a power supply priority of level one among the at least two energy storage apparatuses for power supply, and driving time for the vehicle to be charged to drive to the energy storage apparatus for power supply with a power supply priority of level one being less than the drivable time, the energy storage apparatus for power supply with a power supply priority of level one as the target energy storage apparatus.

In the above embodiment, based on the drivable time of the vehicle, the driving route to each energy storage apparatus for power supply, and the road condition of each driving route, an energy storage apparatus for power supply that enables power supply with the shortest time and the maximum charging power is selected to charge the vehicle to be charged.

In some embodiments, determining, in response to the presence of one energy storage apparatus for power supply with a power supply priority of level one among the at least two energy storage apparatuses for power supply, and driving time for the vehicle to be charged to drive to the energy storage apparatus for power supply with a power supply priority of level one being greater than the drivable time, whether there exists an energy storage apparatus with a power supply priority of level two among the at least two energy storage apparatuses for power supply; and determining, in response to the presence of energy storage apparatuses for power supply with a power supply priority of level two among the at least two energy storage apparatuses for power supply, the target energy storage apparatus from among the energy storage apparatuses with a power supply priority of level two based on road condition information of a power supply route and driving time for the vehicle to be charged to drive to the energy storage apparatuses with a power supply priority of level two.

In the above embodiment, based on the drivable time of the vehicle, the driving route to each energy storage apparatus for power supply, and the road condition of each driving route, an energy storage apparatus for power supply that enables power supply with the shortest time and the maximum charging power is selected to charge the vehicle to be charged.

In some embodiments, the charging reservation method further includes: the in-vehicle system sending a data request to the cloud platform, where the data request includes the current location and a remaining range of the vehicle to be charged, the remaining range being determined by a battery management system of the vehicle to be charged; and the cloud platform, in response to the data request, determining at least two energy storage apparatuses within a preset range from the current location among the plurality of energy storage apparatuses as the energy storage apparatuses for power supply, where the preset range is less than the remaining range.

In the above embodiment, all energy storage apparatuses are integrated into a cloud platform, and interacts with the vehicle to be charged through the cloud platform. This eliminates the need for the vehicle to be charged to check the situation of each energy storage apparatus before making a selection, thereby improving the charging efficiency.

In some embodiments, the energy storage apparatus includes an energy storage module, and the charging reservation information includes a reservation moment and charging duration of the vehicle to be charged, the charging reservation method further including: the target energy storage apparatus charging the energy storage module in response to the charging reservation information; and correspondingly, the updating current reservation status corresponding to the target energy storage apparatus includes: updating, based on the reservation moment and the charging duration, reservation status of a corresponding time period in the current reservation status to obtain updated current reservation status.

In the above embodiment, after the target energy storage apparatus is reserved, it updates its current reservation status to prevent it from being occupied by other vehicles while the vehicle is driving to the target energy storage apparatus, thereby improving the success rate of charging for the vehicle to be charged.

In some embodiments, the method further includes: in response to a situation where the number of times a vehicle has made charging reservations for the target energy storage apparatus exceeds a preset number of times but has not proceeded with charging, starting from the time when the vehicle has not proceeded with charging more than the preset number of times, the cloud platform resuming accepting data requests from the vehicle after a preset time period, and provides the vehicle with at least two energy storage apparatuses for power supply based on a current location of the vehicle.

In the above embodiment, restrictions are imposed on the charging reservation behavior of the user, thereby avoiding waste of resources.

In a second aspect, an embodiment of the present application provides a charging reservation system. The charging reservation system includes: an in-vehicle system of a vehicle to be charged, configured to, in response to a charging request, acquire at least two energy storage apparatuses for power supply that meet a charging condition and power supply status of each energy storage apparatus for power supply, where the power supply status includes current reservation status and a power supply type of each energy storage apparatus for power supply, with energy storage apparatuses for power supply corresponding to different power supply types having different selection priorities; and a cloud platform configured to determine at least two energy storage apparatuses for power supply from among a plurality of energy storage apparatuses connected to the cloud platform based on a current location of the vehicle to be charged; where the in-vehicle system is configured to determine a power supply priority of each energy storage apparatus for power supply based on a selection priority and an occupancy situation of each energy storage apparatus for power supply, where the occupancy situation is determined based on the current reservation status of each energy storage apparatus for power supply; the in-vehicle system further is configured to determine a target energy storage apparatus from among the at least two energy storage apparatuses for power supply based on the power supply priority and driving information for the vehicle to be charged to drive to each energy storage apparatus for power supply, and send charging reservation information to the target energy storage apparatus; and the target energy storage apparatus is configured to, in response to the charging reservation information, update current reservation status corresponding to the target energy storage apparatus to enable a charging reservation of the vehicle to be charged.

In the above embodiment, the target energy storage apparatus for charging the vehicle is determined based on the selection priority and the occupancy situation of each energy storage apparatus for power supply that meets the charging condition and the driving information of the vehicle, and a reservation is then made for target energy storage apparatus. This not only allows the target energy storage apparatus for charging the vehicle to meet the needs of the vehicle to be charged, but also prevents the target energy storage apparatus from being occupied by other vehicles while the vehicle is driving to the target energy storage apparatus. As a result, the success rate of charging for the vehicle to be charged is increased, and the time spent driving around to find an available charging pile is reduced, thereby enhancing the charging efficiency of the vehicle to be charged.

The above description is only an overview of the technical solution of the present application. In order to better understand the technical means of the present application and thus implement them according to the contents of the specification, and in order to make the above and other objectives, features and advantages of the present application more obvious and understandable, the following is the detailed description of the present application.

### BRIEF DESCRIPTION OF DRAWINGS

FIG. 1 is a schematic diagram of a scenario of a charging reservation system provided in an embodiment of the present application;
FIG. 2 is an optional first schematic flowchart of a charging reservation method provided in an embodiment of the present application;
FIG. 3 is an optional second schematic flowchart of a charging reservation method provided in an embodiment of the present application;
FIG. 4 is a first schematic flowchart of a method for reserving charging provided in an embodiment of the present application;
FIG. 5 is a schematic diagram of an architecture of a method for reserving charging provided in an embodiment of the present application; and
FIG. 6 is a second schematic flowchart of a method for reserving charging provided in an embodiment of the present application.

### DETAILED DESCRIPTION

To make the objectives, technical solutions, and advantages of the present application clearer, the present application will be further described in detail below with reference to the accompanying drawings. The described embodiments should not be considered as limitations to the present application. All other embodiments obtained by those of ordinary skill in the art without inventive efforts fall within the scope of protection of the present application.

In the following description, "some embodiments" are involved, which describe a subgroup of all possible embodiments, but it is to be understood that "some embodiments" may be the same or different subsets of all possible embodiments and may be combined with each other without conflict. Unless otherwise defined, all technical and scientific terms used in the embodiments of the present application have the same meanings as commonly understood by those skilled in the art to which the embodiments of the present application pertain. The terms used in the embodiments of the present application are intended solely for the purpose of describing the embodiments of the present application and are not intended to limit the present application.

At present, new energy batteries are increasingly applied in daily life and industry. The new energy batteries are not only applied in energy storage power supply systems such as water power, fire power, wind power, and solar power stations, but also widely applied in electric transportation tools, such as electric bicycles, electric motorcycles and electric vehicles, as well as many fields, such as aerospace. As the application fields of the power batteries continue to expand, their market demand is also constantly expanding. In the embodiments of the present application, the battery involved may be a battery cell, also referred to as a cell. The battery cell refers to a basic unit that can realize mutual conversion of chemical energy and electrical energy, and may be used to make a battery module or a battery pack to provide power to an electrical apparatus. The battery cell may be a secondary battery, and the secondary battery refers to a battery cell that can be used continually by activating an active material in a charging manner after the battery cell is discharged. The battery cell may be a lithium-ion battery, a sodium-ion battery, a sodium/lithium-ion battery, a lithium metal battery, a sodium metal battery, a lithium-sulfur battery, a magnesium-ion battery, a nickel-metal hydride battery, a nickel-cadmium battery, or a lead storage battery, etc., which is not limited in the embodiments of the present application.

In the embodiments of the present application, the cell is the core component of a battery pack. A battery pack typically consists of a plurality of cells combined together to provide the required electrical energy capacity and voltage. The components of a battery pack include: battery cells, a battery management system (BMS), a shell, connecting wiring harnesses, connectors, and interfaces. These components work together to combine the battery cells into a fully functional battery pack for a variety of application scenarios. For example, battery packs can be used in electric vehicles, energy storage systems, portable electrical devices, solar energy systems, wind energy systems, emergency backup power supplies, electric tools, or electric bicycles. The embodiments of the present application impose no limitations on this, and specific choices can be made based on actual application scenarios.

In the embodiments of the present application, the cell may refer to a cell of any shape such as a square cell, a round cell, and the like. Furthermore, the cell typically refers to a battery cell, i.e., one of the basic units constituting a battery. The cell is the core component of a battery, responsible for storing and releasing electrical energy. The cell can be, for example, a lithium-ion battery cell (Li-ion Cell), a lithium-polymer battery cell (Li-polymer Cell), or a nickel-metal hydride battery cell (NiMH Cell). The embodiments of the present application impose no limitations on the type of cells, and specific choices can be made based on actual application scenarios.

It should be noted that the battery pack can utilize different types of battery cells, such as lithium-ion batteries, nickel-metal hydride batteries, lithium-polymer batteries, and so on, which is specifically determined based on the actual application requirements and performance demands.

In the embodiments of the present application, the battery may also be a single physical module including one or more battery cells to provide higher voltage and capacity. When there are a plurality of battery cells, the plurality of battery cells are connected by series connection, or parallel connection, or parallel-series connection through a bus component.

Currently, when a user needs to charge a vehicle while driving, the user typically relies on map software to locate a charging pile along the driving route. However, it is uncertain whether the charging pile will be occupied by another vehicle before the vehicle reaches it. This may result in continuous consumption of electrical energy as the vehicle drives to the charging pile, potentially causing the vehicle to face critical battery depletion. Therefore, finding an available charging pile that the vehicle can reach within its remaining range and ensuring timely charging is an urgent issue that needs to be addressed.

To address the problems present in the related art, through research, the applicant has discovered that it is possible to determine, in advance, energy storage apparatuses capable of supplying power to the vehicle based on the location of the vehicle to be charged, and then determine the final target energy storage apparatus for supplying power to the vehicle to be charged based on the reservation situation of each energy storage apparatus and the driving information for the vehicle to be charged to drive to each energy storage apparatus for power supply, and make a reservation for the target energy storage apparatus. This prevents the target energy storage apparatus from being occupied by other vehicles while the vehicle is driving to the target energy storage apparatus, thereby improving the success rate of charging for the vehicle to be charged, and reducing the time spent driving around to find an available charging pile.

Based on the above considerations, the applicant has conducted in-depth research and found that the in-vehicle system of the vehicle to be charged, after receiving a charging request, can send the current location of the vehicle to the cloud platform, the cloud platform can determine at least two energy storage apparatuses for power supply that meet the charging condition and the power supply status of each energy storage apparatus for power supply based on the current location of the vehicle, and sends the determined information to the in-vehicle system, and the in-vehicle system can then determine a target energy storage apparatus for charging the vehicle based on the power supply status of each energy storage apparatus for power supply and the driving information of the vehicle, and make a reservation for the target energy storage apparatus.

In this way, the embodiment of the present application determines the target energy storage apparatus for charging the vehicle based on the power supply status of each energy storage apparatus for power supply that meets the charging condition and the driving information of the vehicle, and then makes a reservation for the target energy storage apparatus. This not only allows the target energy storage apparatus for charging the vehicle to meet the needs of the vehicle to be charged, but also prevents the target energy storage apparatus from being occupied by other vehicles while the vehicle is driving to the target energy storage apparatus. As a result, the success rate of charging for the vehicle to be charged is increased, and the time spent driving around to find an available charging pile is reduced, thereby enhancing the charging efficiency of the vehicle to be charged.

The charging reservation method disclosed in the embodiments of the present application can be applied, but is not limited, to vehicles, battery vehicles, and electric wheelchairs, among other electrical devices. The charging reservation method disclosed in the present application can be used to make charging reservations.

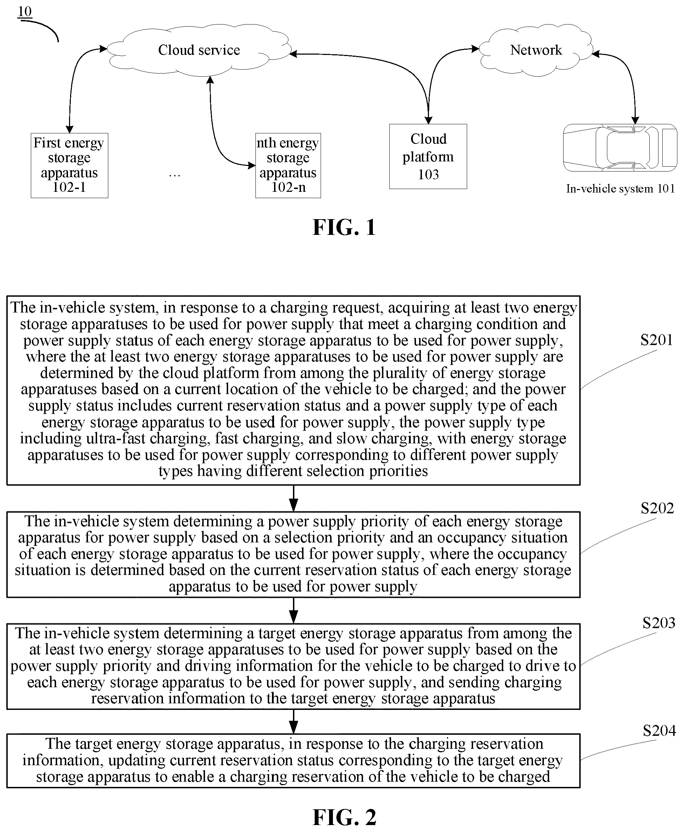

The embodiments of the present application provide a charging reservation method, where the execution subject can be a charging reservation system. FIG. 1 is a schematic diagram of a scenario of a charging reservation system provided in an embodiment of the present application. As shown in FIG. 1, the charging reservation system 10 includes an in-vehicle system 101 of the vehicle to be charged, a plurality of energy storage apparatuses (such as a first energy storage apparatus 102-1 to an nth energy storage apparatus 102-n in the figure), and a cloud platform 103 connected to the plurality of energy storage apparatuses through cloud services.

Here, the vehicle to be charged may refer to any pure electric or hybrid electric vehicle powered by a battery. The in-vehicle system 101 may refer to an intelligent onboard system of the vehicle to be charged. It may include functions such as a central control screen, audio system, navigation system, and vehicle control, making it an essential component of an electric vehicle. The in-vehicle system communicates with the cloud platform 103 through various sensors, controllers, and communication modules, and performs computations.

The first energy storage apparatus 102-1 to the nth energy storage apparatus 102-n can be a storage-charging integrated machine. The storage-charging integrated machine refers to a device that integrates energy storage devices and charging facilities, which may include energy storage apparatuses (such as batteries) and charging facilities (such as charging piles), thereby achieving the functions of storage and release of electrical energy. The storage-charging integrated machine can store electrical energy during periods of lower power grid load or lower electricity prices and release it to charge electric vehicles or other devices when needed. This helps balance the power grid load, reduce charging costs, and improve energy utilization efficiency.

Here, the cloud platform 103 can be implemented as a terminal or a server. In an implementation, the cloud platform provided in the embodiments of the present application can be implemented as any terminal with a data processing function, such as a laptop, tablet, desktop computer, mobile device, intelligent robot, smart home appliance, or intelligent in-vehicle device. In another implementation, the cloud platform provided in the embodiments of the present application can also be implemented as a server. The server can be a standalone physical server, a server cluster composed of a plurality of physical servers, or a distributed system. It can also be a cloud server that provides basic cloud computing services, including cloud services, cloud databases, cloud computing, cloud functions, cloud storage, network services, cloud communication, middleware services, domain name services, security services, content delivery networks (CDNs), and platforms for big data and artificial intelligence. The terminal and the server can be directly or indirectly connected through wired or wireless communication methods, which is not limited in the embodiments of the present application.

It should be noted that the cloud platform 103 can be implemented through cloud technology or cloud services. Cloud technology refers to a hosting technology that unifies a series of resources, such as hardware, software, and networks, within a wide area network (WAN) or local area network (LAN) to achieve computation, storage, processing, and sharing of data. Cloud technology is a collective term for network technology, information technology, integration technology, management platform technology, and application technology, all based on the business model of cloud computing. It can form resource pools that are used on demand, offering flexibility and convenience. Cloud computing technology will become a key support. The backend services of technical network systems require extensive computational and storage resources, such as those for video websites, image-based websites, and various other portal websites. With the rapid development and widespread application of the Internet industry, in the future, every object may have its own identification tag that needs to be transmitted to backend systems for logical processing. Data of different levels and degrees will need to be processed separately. All types of industry data will require robust system support, which can only be achieved through cloud computing.

In the embodiments of the present application, the in-vehicle system 101 can be connected to the cloud platform 103 via a network, and the cloud platform 103 can be connected to a plurality of energy storage apparatuses through a network. The network can be a wide area network (WAN), a local area network (LAN), or a combination of both.

In the operation of a charging reservation system 10 provided in an embodiment of the present application, an in-vehicle system 101 of a vehicle to be charged, in response to a charging request, acquires at least two energy storage apparatuses for power supply that meet a charging condition and power supply status of each energy storage apparatus for power supply provided in the cloud platform 103, where the power supply status includes current reservation status and a power supply type of each energy storage apparatus for power supply, with energy storage apparatuses for power supply corresponding to different power supply types having different selection priorities; the cloud platform 103 determines at least two energy storage apparatuses for power supply from among a plurality of energy storage apparatuses (such as a first energy storage apparatus 102-1 to an nth energy storage apparatus 102-n) connected to the cloud platform 103 based on the current location of the vehicle to be charged; the in-vehicle system 101 is further configured to determine a power supply priority of each energy storage apparatus for power supply based on a selection priority and an occupancy situation of each energy storage apparatus for power supply, where the occupancy situation is determined based on the current reservation status of each energy storage apparatus for power supply; the in-vehicle system is further configured to determine a target energy storage apparatus from among the at least two energy storage apparatuses for power supply based on the power supply priority and driving information for the vehicle to be charged to drive to each energy storage apparatus for power supply, and send charging reservation information to the target energy storage apparatus; and the target energy storage apparatus is configured to, in response to the charging reservation information, update current reservation status corresponding to the target energy storage apparatus to enable a charging reservation of the vehicle to be charged.

In this way, the embodiment of the present application determines the target energy storage apparatus for charging the vehicle based on the selection priority and the occupancy situation of each energy storage apparatus for power supply that meets the charging condition and the driving information of the vehicle, and then makes a reservation for the target energy storage apparatus. This not only allows the target energy storage apparatus for charging the vehicle to meet the needs of the vehicle to be charged, but also prevents the target energy storage apparatus from being occupied by other vehicles while the vehicle is driving to the target energy storage apparatus. As a result, the success rate of charging for the vehicle to be charged is increased, and the time spent driving around to find an available charging pile is reduced, thereby enhancing the charging efficiency of the vehicle to be charged.

The following describes an exemplary application where the cloud platform is implemented as a server, providing a detailed explanation of the technical solution of the present application with reference to the accompanying drawings.

FIG. 2 is an optional first schematic flowchart of a charging reservation method provided in an embodiment of the present application. As shown in FIG. 2, the charging reservation method provided in the embodiment of the present application can be implemented through steps S201 to S204.

Step S201: The in-vehicle system, in response to a charging request, acquiring at least two energy storage apparatuses for power supply that meet a charging condition and power supply status of each energy storage apparatus for power supply, where the at least two energy storage apparatuses for power supply are determined by the cloud platform from among the plurality of energy storage apparatuses based on a current location of the vehicle to be charged; and the power supply status includes current reservation status and a power supply type of each energy storage apparatus for power supply, the power supply type including ultra-fast charging, fast charging, and slow charging, with energy storage apparatuses for power supply corresponding to different power supply types having different selection priorities.

In some embodiments, the charging request can be a command input or selected by the user via the central control screen of the in-vehicle system. This includes, but is not limited to, selection operations, confirmation operations, page-turning operations, or scrolling operations on the central control screen, etc. For example, the user can select a component for reserving charging on the central control screen of the in-vehicle system to issue a charging request. In this case, the charging request is a request that is made by the user driving the vehicle to be charged at any moment, regardless of the state of charge of the battery of the vehicle to be charged.

In some embodiments, the charging request can also be issued by the battery management system (BMS) of the vehicle to be charged. When the state of charge (SOC)of the battery is lower than a preset threshold, for example, when the SOC is below 20%, or when the BMS detects abnormal battery conditions (e.g., rapid battery depletion), it sends a charging request to the in-vehicle system to charge the battery, thereby preventing the vehicle from running out of power and breaking down.

In some embodiments, the in-vehicle system, in response to the charging request, can send a data request to the cloud platform that contains the SOC and the current location of the vehicle to be charged. The data request is used to request the cloud platform to determine energy storage apparatuses capable of charging the vehicle to be charged based on the SOC and current location of the vehicle to be charged. Here, the cloud platform is connected to all the energy storage apparatuses and can acquire the power supply status of each energy storage apparatus in real time, for example, whether the apparatus is currently supplying power, the nearest available reservation time if it is currently supplying power, and the power supply power of each energy storage apparatus (e.g., whether it is an ultra-fast charging energy storage apparatus, and the like). The cloud platform can determine the remaining range of the vehicle to be charged based on the SOC of the vehicle to be charged to obtain the maximum driving distance of the vehicle to be charged, and then based on the current location of the vehicle to be charged, determines a range within which the vehicle to be charged can be supplied with power. The cloud platform can send the power supply status of all energy storage apparatuses within this range to the in-vehicle system. The in-vehicle system then selects and determines the final energy storage apparatus for power supply based on the condition of the vehicle.

Here, the energy storage apparatuses for power supply include all energy storage apparatuses within this range, regardless of whether they are currently occupied. The current reservation status of an energy storage apparatus for power supply can refer to whether the energy storage apparatus for power supply is currently occupied and an available charging reservation moment of the energy storage apparatus for power supply when it is currently occupied. The available charging reservation moment refers to the nearest available reservation time of the energy storage apparatus for power supply. For example, if the current time is 13:00 and the available charging reservation moment of the energy storage apparatus for power supply is 13:30 when it is currently occupied, this energy storage apparatus for power supply can still supply power to the vehicle to be charged.

In some embodiments, the charging condition may be that it is within a preset distance from the current location of the vehicle to be charged, where the preset distance is determined based on the SOC of the vehicle to be charged. After the cloud platform determines at least two energy storage apparatuses for power supply that meet the charging condition and the power supply status of each energy storage apparatus for power supply, it sends the information to the in-vehicle system of the vehicle to be charged.

In some embodiments, the power supply type of the energy storage apparatus for power supply indicates whether the energy storage apparatus for power supply is an ultra-fast charging energy storage apparatus for power supply, a fast charging energy storage apparatus for power supply, or a slow charging energy storage apparatus for power supply. Energy storage apparatuses of different power supply types have different charging power.

In the embodiments of the present application, the energy storage apparatus may be a storage-charging integrated machine. The storage-charging integrated machine itself can be provided with a plurality of charging piles, and different charging piles may have ultra-fast charging, fast charging, and slow charging capabilities. The plurality of charging piles can be used simultaneously. Whether the energy storage apparatus implements ultra-fast charging, fast charging, or slow charging depends on the status of the storage-charging integrated machine, such as the state of charge of its battery, as well as the voltage, current, and power that it can output Therefore, in the embodiments of the present application, energy storage apparatuses capable of providing ultra-fast charging are prioritized.

Here, the energy storage apparatus may also be a charging pile that has been deployed for an extended period and can only provide one of the functions of ultra-fast charging, fast charging, or slow charging. For example, the power of an ultra-fast charging energy storage apparatus for power supply ranges from 120 kilowatts (kW) to 250 kW, while the power of a fast charging energy storage apparatus for power supply is approximately 75 kW. To make vehicle charging faster and more convenient, ultra-fast charging energy storage apparatuses for power supply are prioritized when selecting the target energy storage apparatus, allowing the vehicle to be charged to quickly replenish energy.

Therefore, in the embodiments of the present application, after acquiring the power supply type of each energy storage apparatus for power supply, the selection priority of each energy storage apparatus for power supply can be determined based on the power supply type of each energy storage apparatus for power supply. For example, the selection priorities of ultra-fast charging energy storage apparatuses for power supply, fast charging energy storage apparatuses for power supply, and slow charging energy storage apparatuses for power supply decrease in that order.

Step S202: The in-vehicle system determining a power supply priority of each energy storage apparatus for power supply based on a selection priority and an occupancy situation of each energy storage apparatus for power supply, where the occupancy situation is determined based on the current reservation status of each energy storage apparatus for power supply.

In some embodiments, the current reservation status can represent the charging occupancy situation of the corresponding energy storage apparatus. The occupancy situation includes whether the energy storage apparatus for power supply is currently occupied and an available charging reservation moment of each energy storage apparatus for power supply when it is currently occupied.

Here, the power supply priority refers to the order in which each energy storage apparatus for power supply is considered when determining the target energy storage apparatus from among the at least two energy storage apparatuses for power supply. Specifically, energy storage apparatuses for power supply with higher power supply priorities are considered first. If the energy storage apparatuses for power supply with higher power supply priorities cannot be selected as the target energy storage apparatus, energy storage apparatuses for power supply with the next priority are then considered.

The power supply priority is comprehensively determined based on the occupancy situation and selection priority of each energy storage apparatus for power supply. For example, it is first determined based on the selection priority whether there are ultra-fast charging energy storage apparatuses for power supply among the at least two energy storage apparatuses for power supply. Then, further determination is performed based on the occupancy situations of the ultra-fast charging energy storage apparatuses for power supply. For example, the power supply priority of a currently unoccupied ultra-fast charging energy storage apparatus for power supply is higher than that of a currently occupied one. In this way, the power supply priority of each energy storage apparatus for power supply is determined.

In some embodiments, the determination can also be performed in combination with the electricity cost for charging the vehicle to be charged at each energy storage apparatus for power supply. Due to differences in the distances to the energy storage apparatuses for power supply, the energy storage apparatuses for power supply may be located in different regions. For instance, some are energy storage apparatuses in commercial areas, while others are in residential areas. The time required to reach them also differs, leading to variations in charging prices. Therefore, the power supply priority of each energy storage apparatus for power supply can also be determined in combination with the electricity cost. For example, among ultra-fast charging energy storage apparatuses for power supply that are in an idle state, an energy storage apparatus for power supply with a lower electricity cost will have a higher power supply priority.

Step S203: The in-vehicle system determining a target energy storage apparatus from among the at least two energy storage apparatuses for power supply based on the power supply priority and driving information for the vehicle to be charged to drive to each energy storage apparatus for power supply, and sending charging reservation information to the target energy storage apparatus.

In some embodiments, the driving information for the vehicle to be charged to drive to each energy storage apparatus for power supply may refer to the optimal driving route for the vehicle to be charged to drive to each energy storage apparatus for power supply, the driving time for driving based on this optimal driving route, the road condition information of the optimal driving route, and the conditions of energy storage apparatuses along the optimal driving route (e.g., there are a plurality of energy storage apparatuses along the route, allowing the vehicle to drive to a nearby energy storage apparatus to wait for charging in case of extreme situations during the trip, such as sudden battery depletion).

In some embodiments, after determining the power supply priority of each energy storage apparatus for power supply, if there are a plurality of unoccupied ultra-fast charging energy storage apparatuses for power supply (i.e., the energy storage apparatuses with the highest power supply priority) among the at least two energy storage apparatuses for power supply, the ultra-fast charging energy storage apparatus for power supply with the shortest driving time can be determined as the target energy storage apparatus.

Here, the priority sequence of a plurality of unoccupied energy storage apparatuses can also be determined based on the driving time, where one with the shortest driving time has the highest priority. The target energy storage apparatus can then be determined based on the road condition of each driving route, such as whether the route is currently free of traffic congestion or road construction.

In some embodiments, after the in-vehicle system receives the at least two energy storage apparatuses for power supply, the at least two energy storage apparatuses for power supply can be displayed on the map of the central control screen for the user to view. The user can select a currently unoccupied energy storage apparatus for power supply near the destination as the target energy storage apparatus based on the destination and send charging reservation information to the target energy storage apparatus. Here, the user can click on the central control screen to check the power supply status of the energy storage apparatuses for power supply and select the target energy storage apparatus.

In some embodiments, after determining the target energy storage apparatus, charging reservation information is sent to the target energy storage apparatus to reserve the target energy storage apparatus, preventing other vehicles from using this target energy storage apparatus for charging before the vehicle to be charged arrives at the target energy storage apparatus.

In some embodiments, the charging reservation information can at least include the charging reservation time of the vehicle to be charged. For example, the charging reservation information indicates that charging will start at 14:00 with the charging duration of 1 hour.

Here, if the target energy storage apparatus is currently unoccupied, the charging reservation time in the charging reservation information can be the current moment, i.e., the reservation starts from the current moment. If the target energy storage apparatus is currently occupied, the charging reservation time in the charging reservation information can be either the estimated moment when the vehicle to be charged is expected to reach the target energy storage apparatus or the earliest available reservation moment for the target energy storage apparatus.

Step S204: The target energy storage apparatus, in response to the charging reservation information, updating reservation information corresponding to the target energy storage apparatus to enable a charging reservation of the vehicle to be charged.

In the embodiments of the present application, after receiving the charging reservation information, the target energy storage apparatus modifies the current reservation status of the target energy storage apparatus based on the charging reservation time and reservation duration in the charging reservation information. For example, the time slot from 14:00 to 15:00 is updated as reserved and displayed on the display interface of the target energy storage apparatus.

The embodiment of the present application determines the target energy storage apparatus for charging the vehicle based on the power supply status of each energy storage apparatus for power supply that meets the charging condition and the driving information of the vehicle, and then makes a reservation for the target energy storage apparatus. This not only allows the target energy storage apparatus for charging the vehicle to meet the needs of the vehicle to be charged, but also prevents the target energy storage apparatus from being occupied by other vehicles while the vehicle is driving to the target energy storage apparatus. As a result, the success rate of charging for the vehicle to be charged is increased, and the time spent driving around to find an available charging pile is reduced, thereby enhancing the charging efficiency of the vehicle to be charged.

In some embodiments, the occupancy situation includes whether the energy storage apparatus for power supply is currently occupied and an available charging reservation moment of each energy storage apparatus for power supply when it is currently occupied; and the selection priorities of the energy storage apparatuses for power supply decrease sequentially in the order of ultra-fast charging, fast charging, and slow charging. Step S202 can be implemented through steps S3031 to S3034.

Step S3031: Determining, in response to the presence of an ultra-fast charging energy storage apparatus for power supply among the at least two energy storage apparatuses for power supply and the ultra-fast charging energy storage apparatus for power supply being currently unoccupied, a power supply priority of the ultra-fast charging energy storage apparatus for power supply as level one.

In some embodiments, if there is an ultra-fast charging energy storage apparatus for power supply among the at least two energy storage apparatuses for power supply, and the ultra-fast charging energy storage apparatus for power supply is currently unoccupied, the power supply priority of the ultra-fast charging energy storage apparatus for power supply can be directly determined as level one. When determining the target energy storage apparatus, priority is given to performing determination on energy storage apparatuses for power supply with a power supply priority of level one.

Step S3032: Determining, in response to the presence of an ultra-fast charging energy storage apparatus for power supply among the at least two energy storage apparatuses for power supply and the ultra-fast charging energy storage apparatus for power supply being currently occupied, a driving moment when the vehicle to be charged drives to the ultra-fast charging energy storage apparatus for power supply based on a power supply location of the ultra-fast charging energy storage apparatus for power supply.

In some embodiments, if there is an ultra-fast charging energy storage apparatus for power supply among the at least two energy storage apparatuses for power supply, but the ultra-fast charging energy storage apparatus for power supply is currently occupied, meaning that there is a vehicle currently charging at this ultra-fast charging energy storage apparatus for power supply. At this point, the driving moment when the vehicle to be charged drives to the ultra-fast charging energy storage apparatus for power supply can be determined based on the power supply location of the ultra-fast charging energy storage apparatus for power supply. That is, the time when the vehicle to be charged drives to the ultra-fast charging energy storage apparatus for power supply can be determined, for example, 13:47.

In some embodiments, determining the driving moment when the vehicle to be charged drives to the ultra-fast charging energy storage apparatus may involve the in-vehicle system determining the driving route of the vehicle based on the power supply location of the ultra-fast charging energy storage apparatus for power supply and the current location of the vehicle to be charged, and then estimating the driving moment based on the driving path and the road condition. Here, the in-vehicle system can obtain a plurality of driving routes.

Step S3033: Determining, in response to the driving moment being greater than the available charging reservation moment, a power supply priority of the ultra-fast charging energy storage apparatus for power supply as level one.

Here, the available charging reservation moment refers to the nearest reservation moment at which the ultra-fast charging energy storage apparatus for power supply can be reserved for charging. For example, if the current time is 12:58 and the ultra-fast charging energy storage apparatus for power supply is currently supplying power to another vehicle but is expected to finish at 13:36, while the vehicle to be charged can arrive at the ultra-fast charging energy storage apparatus for power supply at 13:47, which means that the driving moment is greater than the available charging reservation moment. At this point, the ultra-fast charging energy storage apparatus for power supply is no longer occupied. In this case, the power supply priority of the ultra-fast charging energy storage apparatus for power supply can be determined as level one.

In some embodiments, if the driving moment is less than the available charging reservation moment, the ultra-fast charging energy storage apparatus for power supply is determined as an energy storage apparatus that cannot provide electrical energy to the vehicle to be charged.

In the embodiments of the present application, not only unoccupied charging piles are considered, but also the driving time of the vehicle and the end time of occupied charging piles are taken into account. This enables the consideration of more ultra-fast charging energy storage apparatuses for power supply for charging, thereby improving the charging efficiency.

Step S3034: In response to the absence of an ultra-fast charging energy storage apparatus for power supply among the at least two energy storage apparatuses for power supply, determining a power supply priority of a currently unoccupied fast charging energy storage apparatus for power supply as level two, and determining a power supply priority of a currently unoccupied slow charging energy storage apparatus for power supply as level three.

In some embodiments, if there is no ultra-fast charging energy storage apparatus for power supply among the at least two energy storage apparatuses for power supply, priority is given to fast charging energy storage apparatuses for power supply to supply power to the vehicle to be charged, and the power supply priority of currently unoccupied fast charging energy storage apparatuses for power supply is determined as level two. Here, the power supply priority of a fast charging energy storage apparatus for power supply can also be determined as level two if it is already occupied, but the driving moment when the vehicle to be charged drives to the fast charging energy storage apparatus for power supply is greater than the available charging reservation moment of the fast charging energy storage apparatus for power supply.

Similarly, the power supply priority of a currently unoccupied slow charging energy storage apparatus for power supply can be determined as level three. Additionally, the power supply priority of a slow charging energy storage apparatus for power supply can be determined as level three if it is already occupied, but the driving moment when the vehicle to be charged drives to the slow charging energy storage apparatus for power supply is greater than the available charging reservation moment of the fast charging energy storage apparatus for power supply.

In some embodiments, after determining the power supply priorities of the energy storage apparatuses, when determining the target energy storage apparatus, in addition to the power supply priority, the battery type of the vehicle to be charged can also be matched with the power supply types of the energy storage apparatuses to obtain the target energy storage apparatus.

In the embodiments of the present application, based on the power supply types of energy storage apparatuses, an ultra-fast charging energy storage apparatus for power supply is preferentially selected for the vehicle to be charged. However, when no ultra-fast charging energy storage apparatus for power supply is available, an energy storage apparatus that supply power faster is provided for the vehicle based on the power supply type to enhance the charging efficiency.

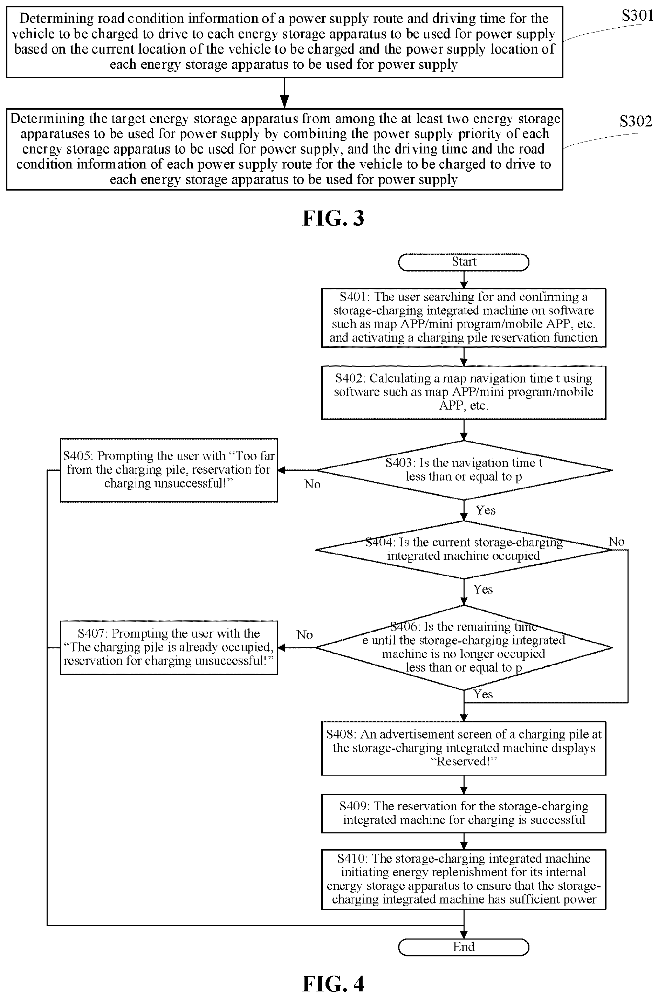

In some embodiments, the power supply status further includes the power supply location of each energy storage apparatus for power supply. Based on the current reservation status, the power supply location, the power supply priority, and the driving information for the vehicle to be charged to drive to each energy storage apparatus for power supply, the target energy storage apparatus can be determined from among the at least two energy storage apparatuses for power supply. FIG. 3 is an optional second schematic flowchart of a charging reservation method provided in an embodiment of the present application. As shown in FIG. 3, step S203 can be implemented through steps S301 and S302.

Step S301: Determining road condition information of a power supply route and driving time for the vehicle to be charged to drive to each energy storage apparatus for power supply based on the current location of the vehicle to be charged and the power supply location of each energy storage apparatus for power supply.

Here, after obtaining the power supply location of each energy storage apparatus for power supply, the driving route from the current location of the vehicle to be charged to each energy storage apparatus for power supply can be determined based on the current location. The driving route can be implemented based on the map of the in-vehicle system.

After determining the driving route, the driving time for the vehicle to be charged to drive to each energy storage apparatus for power supply can be estimated based on the driving speed of the vehicle to be charged, thereby obtaining the driving moment for reaching the energy storage apparatus for power supply.

In some embodiments, the in-vehicle system also receives traffic information in real time and determines the driving road conditions of each driving route in real time (e.g., whether there is traffic congestion). Based on the driving road conditions, the driving time and driving moment for reaching each energy storage apparatus for power supply are updated in real time.

Step S302: Determining the target energy storage apparatus from among the at least two energy storage apparatuses for power supply by combining the power supply priority of each energy storage apparatus for power supply, and the driving time and the road condition information of each power supply route for the vehicle to be charged to drive to each energy storage apparatus for power supply.

In some embodiments, after determining the power supply priority of each energy storage apparatus for power supply, and the driving time and the driving conditions for driving to each energy storage apparatus for power supply, the target energy storage apparatus is comprehensively considered based on these pieces of information. For example, based on the power supply priority, it can be determined first among the level one energy storage apparatuses whether there is an apparatus capable of supplying power to the vehicle to be charged based on the driving time. If none is available, the energy storage apparatuses with a power supply priority of level two are considered.

In some embodiments, step S302 can be implemented through steps S3021 to S3025.

Step S3021: Comparing, in response to the presence of not less than two energy storage apparatuses for power supply with a power supply priority of level one among the at least two energy storage apparatuses for power supply, drivable time of the vehicle to be charged with driving time for the vehicle to be charged to drive to the energy storage apparatuses for power supply with a power supply priority of level one to obtain a comparison result.

In some embodiments, it is first determined whether an ultra-fast charging power supply apparatus exists based on the power supply priority. If there exist not less than two energy storage apparatuses for power supply with a power supply priority of level one among the at least two energy storage apparatuses for power supply, that is, if there are two or more ultra-fast charging energy storage apparatuses for power supply that are capable of supplying power, at this point, the drivable time of the vehicle to be charged, i.e., how long the vehicle can still drive and whether it can reach the energy storage apparatus, can be determined.

Here, the drivable time can be directly acquired by the in-vehicle system from the BMS, or can be obtained by the in-vehicle system through acquiring the SOC of the vehicle to be charged and performing estimation based on the SOC and the driving speed of the vehicle.

Here, the driving time for the vehicle to be charged to drive to an energy storage apparatus for power supply with a power supply priority of level one can be obtained by first estimating the optimal driving route to each energy storage apparatus for power supply and then determining it based on the driving speed and the optimal driving route of the vehicle.

In the embodiments of the present application, the comparison of the drivable time with the driving time for the vehicle to be charged to drive to an energy storage apparatus for power supply with a power supply priority of level one is used to determine whether the SOC of the vehicle is sufficient to drive to each energy storage apparatus for power supply.

Step S3022: Determining, in response to the comparison result indicating the presence of not less than two energy storage apparatuses for power supply with a power supply priority of level one that have driving time less than the drivable time, an energy storage apparatus for power supply that has the shortest driving time as the target energy storage apparatus, in conjunction with the road condition information.

Here, if the drivable time of the vehicle to be charged is greater than the time to an energy storage apparatus for power supply with a power supply priority of level one, that is, if the SOC of the vehicle to be charged is sufficient to drive to the energy storage apparatus for power supply with a power supply priority of level one, the driving time for driving to the energy storage apparatus for power supply with a power supply priority of level one is updated at this point based on the acquired road condition information, and the energy storage apparatus for power supply with the shortest driving time is determined as the target energy storage apparatus.

Step S3023: Determining, in response to the presence of one energy storage apparatus for power supply with a power supply priority of level one among the at least two energy storage apparatuses for power supply, and driving time for the vehicle to be charged to drive to the energy storage apparatus for power supply with a power supply priority of level one being less than the drivable time, the energy storage apparatus for power supply with a power supply priority of level one as the target energy storage apparatus.

In some embodiments, if there exists one energy storage apparatus for power supply with a power supply priority of level one among the at least two energy storage apparatuses for power supply, and the driving time for the vehicle to be charged to drive to the energy storage apparatus for power supply with a power supply priority of level one is less than the drivable time, which indicates that the SOC of the vehicle to be charged is sufficient to drive to the energy storage apparatus for power supply with a power supply priority of level one, the energy storage apparatus for power supply with a power supply priority of level one is determined as the target energy storage apparatus at this time.

Step S3024: Determining, in response to the presence of one energy storage apparatus for power supply with a power supply priority of level one among the at least two energy storage apparatuses for power supply, and driving time for the vehicle to be charged to drive to the energy storage apparatus for power supply with a power supply priority of level one being greater than the drivable time, whether there exists an energy storage apparatus with a power supply priority of level two among the at least two energy storage apparatuses for power supply.

In some embodiments, if there exists one energy storage apparatus for power supply with a power supply priority of level one among the at least two energy storage apparatuses for power supply, and the driving time for the vehicle to be charged to drive to the energy storage apparatus for power supply with a power supply priority of level one is greater than the drivable time, which indicates that the SOC of the vehicle to be charged is insufficient to drive to the energy storage apparatus for power supply with a power supply priority of level one, making it impossible to charge the vehicle to be charged through the ultra-fast charging energy storage apparatus at this point, it is determined whether there exists an energy storage apparatus for power supply with a power supply priority of level two. If so, the vehicle to be charged is supplied with power through the fast charging energy storage apparatus for power supply.

Step S3025: Determining, in response to the presence of energy storage apparatuses with a power supply priority of level two among the at least two energy storage apparatuses for power supply, the target energy storage apparatus from among the energy storage apparatuses with a power supply priority of level two based on road condition information of a power supply route and driving time for the vehicle to be charged to drive to the energy storage apparatuses with a power supply priority of level two.

In the embodiments of the present application, if there exist energy storage apparatuses for power supply with a power supply priority of level two among the at least two energy storage apparatuses for power supply, the number of fast charging energy storage apparatuses for power supply is determined. If there are a plurality of such apparatuses, based on similar steps as described earlier, one fast charging energy storage apparatus for power supply is determined through the road condition information and the driving time to supply power to the vehicle to be charged.

In the embodiments of the present application, based on the drivable time of the vehicle, the driving route to each energy storage apparatus for power supply, and the road condition of each driving route, an energy storage apparatus for power supply that enables power supply with the shortest time and the maximum charging power is selected to charge the vehicle to be charged.

In some embodiments, the cloud platform is connected to all energy storage apparatuses and is used to, in response to a data acquisition request of the vehicle to be charged, acquire energy storage apparatuses capable of supplying power to the vehicle to be powered within a range and information corresponding to the energy storage apparatuses. That is, the at least two energy storage apparatuses for power supply are determined by the cloud platform. Therefore, the charging reservation method provided in the embodiments of the present application may further include steps S1 and S2.

Step S1: The in-vehicle system sending a data request to the cloud platform, where the data request includes the current location and a remaining range of the vehicle to be charged, the remaining range being determined by a battery management system of the vehicle to be charged.

In some embodiments, the data request is used to request the cloud platform to search near the vehicle to be charged for at least two energy storage apparatuses for power supply that are capable of supplying power based on the current location and remaining range of the vehicle to be charged.

Step S2: The cloud platform, in response to the data request, determining at least two energy storage apparatuses within a preset range from the current location among the plurality of energy storage apparatuses as the energy storage apparatuses for power supply, where the preset range is less than the remaining range.

In the embodiments of the present application, after obtaining the remaining range of the vehicle to be charged, the cloud platform can determine the maximum range the vehicle to be charged can drive, i.e., the preset range, based on the remaining range of the vehicle to be charged. The energy storage apparatuses within the preset range are determined as the energy storage apparatuses for power supply that are capable of supplying power to the vehicle to be charged, and the power supply status of at least two energy storage apparatuses for power supply within the preset range is then sent to the vehicle to be charged.

In some embodiments, if there is only one energy storage apparatus within the preset range, the energy storage apparatus is sent to the vehicle to be charged, and the vehicle to be charged confirms whether to reserve the available reservation time of the energy storage apparatus, and subsequently drive to the energy storage device to wait for charging.

In some embodiments, if there is no energy storage apparatus within the preset range, information indicating the absence of an energy storage apparatus is sent to the vehicle to be charged, and the vehicle to be charged performs subsequent operations.

In the embodiments of the present application, all energy storage apparatuses are integrated into a cloud platform, and interacts with the vehicle to be charged through the cloud platform. This eliminates the need for the vehicle to be charged to check the situation of each energy storage apparatus before making a selection, thereby improving the charging efficiency.

In some embodiments, the energy storage apparatus includes an energy storage module and a control module. The energy storage module may refer to a battery, to achieve the functions of storing and releasing electrical energy. Through the energy storage module, electrical energy can be stored during periods of lower power grid load or lower electricity prices and then released to charge electric vehicles or other devices when needed. Therefore, the charging reservation method provided in the embodiments of the present application may further include the target energy storage apparatus charging the energy storage module in response to the charging reservation information. That is, the control module of the target energy storage apparatus charges the energy storage module in response to the charging reservation information.

In some embodiments, the charging reservation information may include a reservation moment and charging duration of the vehicle to be charged. Therefore, the updating current reservation status corresponding to the target energy storage apparatus in step S204 includes: updating, based on the reservation moment and the charging duration, reservation status of a corresponding time period in the current reservation status to obtain updated current reservation status.

In some embodiments, the charging reservation information may indicate that charging will start at 14:00 with the charging duration of 1 hour. The vehicle to be charged can directly send the charging reservation information to the target energy storage apparatus or send the charging reservation information to the target energy storage apparatus based on the cloud platform.

After receiving the charging reservation information, the target energy storage apparatus modifies the current reservation status of the target energy storage apparatus based on the charging reservation time and reservation duration in the charging reservation information. For example, the time slot from 14:00 to 15:00 is updated as reserved and displayed on the display interface of the target energy storage apparatus.

In the embodiments of the present application, after the target energy storage apparatus is reserved, it updates its current reservation status to prevent it from being occupied by other vehicles while the vehicle is driving to the target energy storage apparatus, thereby improving the success rate of charging for the vehicle to be charged.

In some embodiments, the energy storage apparatus may also include a sensor, a display interface, and a voice module. The charging reservation method provided in the embodiments of the present application may further include step S11.

Step S11: The target energy storage apparatus determining, based on the sensor, that a vehicle other than the vehicle to be charged enters a charging area of the target energy storage apparatus, displays the updated current reservation status on the display interface, and provides voice guidance to the vehicle through the voice module.

Here, the sensor is used to detect whether a vehicle has entered the charging area corresponding to the target energy storage apparatus. If a vehicle has entered and it is not the vehicle to be charged that has made a reservation, the updated current reservation status can be shown on the display interface (e.g., displaying the text "Reserved"), and voice guidance can be provided to the vehicle based on the voice module. For example, it can notify that the energy storage apparatus is already reserved and indicate the location of the nearest energy storage apparatus, directing the vehicle to leave.

The target energy storage apparatus in the embodiments of the present application interacts with vehicles through the voice module, thereby preventing the target energy storage apparatus from being occupied by other vehicles before the arrival of the reserved vehicle to be charged.

In some embodiments, to avoid resource waste and prevent users from making multiple reservations and not charging within the specified time, the cloud platform can impose restrictions on users who have successfully made reservations more than three times but failed to charge within the specified time. Therefore, the charging reservation method provided in the embodiments of the present application may further include step S21.

Step S21: In response to a situation where the number of times a vehicle has made charging reservations for the target energy storage apparatus exceeds a preset number of times but has not proceeded with charging, starting from the time when the vehicle has not proceeded with charging more than the preset number of times, the cloud platform resuming accepting data requests from the vehicle after a preset time period, and provides the vehicle with at least two energy storage apparatuses for power supply based on a current location of the vehicle.

In the embodiments of the present application, the preset number of times can be 3. If a situation arises where a vehicle has made three reservations for an energy storage apparatus but has not proceeded with charging on time, the cloud platform can impose restrictions on the vehicle within a preset time period (e.g., one month). For instance, starting from the time when the vehicle has not proceeded with charging more than three times, the cloud platform will no longer accept data requests from the vehicle for one month. During this one-month period, the vehicle will be unable to acquire information about energy storage apparatuses through the cloud platform and unable to quickly locate a suitable power supply apparatus.

In the embodiments of the present application, restrictions are imposed on the charging reservation behavior of the user, thereby avoiding waste of resources.

The charging reservation method provided in the embodiments of the present application is implemented based on the charging reservation system. The description of the system embodiments is similar to the description of the aforementioned method embodiments and provides beneficial effects similar to those of the method embodiments. In some embodiments, the functions or modules incorporated in the system provided in the embodiments of the present disclosure can be used to execute the method described in the aforementioned method embodiments. For technical details not disclosed in the system embodiments of the present application, please refer to the description of the method embodiments of the present application for understanding.

The following will illustrate an exemplary application of the embodiments of the present application in a practical application scenario.

Based on the issue in the related art where charging positions for electric vehicles during driving are insufficient and frequently occupied, the embodiments of the present application provide a method for reserving charging based on a storage-charging integrated machine. FIG. 4 is a first schematic flowchart of a method for reserving charging provided in an embodiment of the present application. As shown in FIG. 4, the method for reserving charging can be implemented through steps S401 to S410.

S401: The user searching for and confirming a storage-charging integrated machine on software such as map APP/mini program/mobile APP, etc. and activating a charging pile reservation function.

In the embodiments of the present application, while driving the vehicle, the user can search for and confirm a storage-charging integrated machine on software such as map application (APP), a mini program, or a mobile APP, etc. and activate a charging pile reservation function.

Here, software such as map APP/mini program/mobile APP, etc. communicates with a monitoring platform (i.e., the cloud platform) via wireless communication, and the monitoring platform communicates with various storage-charging integrated machines through cloud services.

The storage-charging integrated machine here can be one selected by the driver of the vehicle from a plurality of storage-charging integrated machines that are determined by the cloud platform based on the current location of the vehicle to be capable of supplying energy to the vehicle.

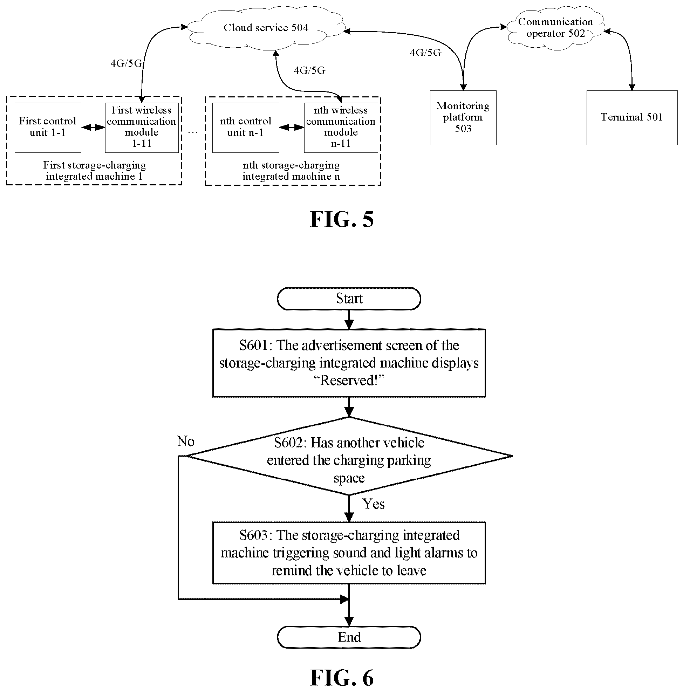

FIG. 5 is a schematic diagram of an architecture of a method for reserving charging provided in an embodiment of the present application. As shown in FIG. 5, a terminal 501 can be a mobile terminal or an in-vehicle system. The map APP, mini program, or mobile APP on the mobile phone, or the in-vehicle system communicates with a monitoring platform 503 through a communication operator 502. The monitoring platform 503 communicates with various storage-charging integrated machines (e.g., a first storage-charging integrated machine 1 to an nth storage-charging integrated machine n) through a cloud service 504. The first storage-charging integrated machine 1 is at least composed of a first control unit 1-1 and a first wireless communication module 1-11, where the first control unit 1-1 communicates with the cloud service 504 through the first wireless communication module 1-11, and an nth control unit n-1 communicates with the cloud service 504 through an nth wireless communication module n-11.

S402: Calculating a map navigation time t using software such as map APP/mini program/mobile APP, etc.

In the embodiments of the present application, after a storage-charging integrated machine is found, the route from the vehicle to be charged to the storage-charging integrated machine can be determined based on the map, thereby determining the navigation time t.

S403: Is the navigation time t less than or equal to p.

In some embodiments, if the navigation time t is less than or equal to p, step S404 is executed to determine whether the current storage-charging integrated machine is occupied. If the navigation time t is greater than p, step S405 is executed to prompt the user with "Too far from the charging pile, reservation for charging unsuccessful!"

Here, p can be a time set by the user, such as 1 hour, or it can also be the range time of the battery to be charged.

S404: Is the current storage-charging integrated machine occupied.

In some embodiments, it is determined whether there is a vehicle currently charging at the storage-charging integrated machine.

In some embodiments, if the current storage-charging integrated machine is occupied, step S406 is executed. If the current storage-charging integrated machine is not occupied, step S408 is executed.

S405: Prompting the user with "Too far from the charging pile, reservation for charging unsuccessful!"

S406: Is the remaining time e until the storage-charging integrated machine is no longer occupied less than or equal to p.

In some embodiments, the remaining time e until the storage-charging integrated machine is no longer occupied refers to the remaining time for the current storage-charging integrated machine to complete the current power supply. If it is less than or equal to p, the vehicle can be charged upon arrival at the storage-charging integrated machine. At this point, a reservation for the storage-charging integrated machine can be made.

In some embodiments, if the remaining time e is less than or equal to p, step S408 is executed to make a reservation for the storage-charging integrated machine; if the remaining time e is greater than p, step S407 is executed to prompt that the storage-charging integrated machine is occupied.

S407: Prompting the user with the "The charging pile is already occupied, reservation for charging unsuccessful!"

Here, if the remaining time e is greater than p, it indicates that when the vehicle arrives at the storage-charging integrated machine, there is another vehicle currently charging. Therefore, the user can be prompted with "The charging pile is already occupied, reservation for charging unsuccessful!" to prompt the user to select another storage-charging integrated machine.

S408: An advertisement screen of a charging pile at the storage-charging integrated machine displays "Reserved!".

S409: The reservation for the storage-charging integrated machine for charging is successful.

S410: The storage-charging integrated machine initiating energy replenishment for its internal energy storage apparatus to ensure that the storage-charging integrated machine has sufficient power.

In the embodiments of the present application, after the reservation for the storage-charging integrated machine is successful, the storage-charging integrated machine initiates energy replenishment for its internal energy storage apparatus to ensure that the storage-charging integrated machine has sufficient power.

FIG. 6 is a second schematic flowchart of a method for reserving charging provided in an embodiment of the present application. As shown in FIG. 6, the method for reserving charging provided in the embodiments of the present application may further include steps S601 to S603.

S601: The advertisement screen of the storage-charging integrated machine displays "Reserved!".

In the embodiments of the present application, when the storage-charging integrated machine is reserved, the advertisement screen of the storage-charging integrated machine displays "Reserved!".

S602: Has another vehicle entered the charging parking space.

The storage-charging integrated machine can detect whether a vehicle has entered the charging parking space before the arrival of the vehicle to be charged. If so, sound and light alarms can be triggered to remind the vehicle to leave.

S603: The storage-charging integrated machine triggering sound and light alarms to remind the vehicle to leave.

The method for reserving charging provided in the embodiments of the present application combines measures such as map navigation time and the advertisement screen display of the storage-charging integrated machine to achieve charging reservation, thereby avoiding the problem of the storage-charging integrated machine being occupied and unable to provide charging.

It should be understood that the terms "one embodiment" or "an embodiment" mentioned throughout the specification mean that a particular feature, structure, or characteristic described in connection with the embodiment is included in at least one embodiment of the present application. Thus, "in one embodiment" or "in an embodiment" that appears throughout the specification may not necessarily refer to the same embodiment. In addition, these specific features, structures, or characteristics may be combined in one or more embodiments in any suitable manner. It should be understood that in the various embodiments of the present application, the magnitude of the serial numbers of the above steps/processes does not imply the order of execution, and the execution order of the steps/processes should be determined by their functions and internal logic, and should not constitute any limitation on the implementation process of the embodiments of the present application. The serial numbers in the above embodiments of the present application are only for the purpose of description, and do not represent the advantages or disadvantages of the embodiments.

The orientations or positional relationships indicated by the terms "upper", "lower", "top", "bottom", "front", "rear", "inner", "outer" and the like are used in the present application only for facilitating the description of the present application, rather than indicating or implying that the apparatus referred to needs to have a particular orientation or be constructed and operated in a particular orientation, and therefore they shall not be interpreted as limiting the protection scope of the present application.

In the description of the present application, it should also be noted that, unless otherwise expressly specified and limited, the terms "mount," "connected," and "connecting" should be broadly understood, for example, they may be a fixed connection or a detachable connection or be an integrated connection; or may be a direct connection or an indirect connection through an intermediate medium. For those of ordinary skill in the art, the specific meanings of the above terms in the present application may be understood according to specific circumstances.

It should be noted that terms "including", "containing", or any other variations in the present application are intended to cover non-exclusive inclusion, such that a process, method, item or apparatus that includes a series of elements not only includes those elements, but also other elements that are not explicitly listed, or further include elements inherent in such the process, method, item or apparatus. Without more limitations, an element defined by a statement "including one ..." do not exclude the existence of other identical elements in the process, method, item or apparatus that includes that element.

In the several embodiments provided in the present application, it should be understood that the disclosed system, device, and method may be implemented in other manners. The device embodiments described above are only illustrative. For example, the division of the units is only a logical function division. In an actual implementation, there may be other division approaches. For example, a plurality of units or components may be combined, or may be integrated into another system, or some features may be ignored, or not implemented. In addition, the coupling, direct coupling, or communication connection between the various components displayed or discussed can be indirect coupling or communication connection through some interfaces, equipment or units, which can be electrical, mechanical, or other forms.

The units mentioned above as separate components may be, or may not be physically separated, and the parts displayed as units may be, or may not be physical units; they may be located in one place or distributed onto a plurality of network units; and some or all of the units can be selected according to actual needs to achieve the purpose of the solution of this embodiment. Additionally, in the embodiments of the present application, the functional units can all be integrated into a single processing unit, or each unit can be implemented as an independent unit, or two or more units can be integrated into one unit. The aforementioned integrated units can be implemented in the form of hardware, or can be implemented in a combination of hardware and software functional units.

The above are merely embodiments of the present application and are not intended to limit the scope of protection of the present application. Any modifications, equivalent replacements and improvements, etc., made within the spirit and scope of the present application fall within the scope of protection of the present application.

## Claims

1. A charging reservation method applicable to a charging reservation system comprising an in-vehicle system of a vehicle to be charged, a plurality of energy storage apparatuses, and a cloud platform connected to the plurality of energy storage apparatuses, the charging reservation method comprising:
the in-vehicle system, in response to a charging request, acquiring at least two energy storage apparatuses for power supply, which meet a charging condition, and power supply status of each energy storage apparatus for power supply, wherein the at least two energy storage apparatuses for power supply are determined by the cloud platform from among the plurality of energy storage apparatuses based on a current location of the vehicle to be charged; and the power supply status comprises current reservation status and a power supply type of each energy storage apparatus for power supply, the power supply type comprising ultra-fast charging, fast charging, and slow charging, with energy storage apparatuses for power supply corresponding to different power supply types having different selection priorities;
the in-vehicle system determining a power supply priority of each energy storage apparatus for power supply based on a selection priority and an occupancy situation of each energy storage apparatus for power supply, wherein the occupancy situation is determined based on the current reservation status of each energy storage apparatus for power supply;
the in-vehicle system determining a target energy storage apparatus from among the at least two energy storage apparatuses for power supply based on the power supply priority and driving information for the vehicle to be charged to drive to each energy storage apparatus for power supply, and sending charging reservation information to the target energy storage apparatus; and
the target energy storage apparatus, in response to the charging reservation information, updating current reservation status corresponding to the target energy storage apparatus to establish a charging reservation for the vehicle to be charged.

2. The charging reservation method according to claim 1, wherein the power supply status further comprises a power supply location of each energy storage apparatus for power supply, and
the in-vehicle system determining a target energy storage apparatus from among the at least two energy storage apparatuses for power supply based on the power supply priority and driving information for the vehicle to be charged to drive to each energy storage apparatus for power supply comprises:
determining road condition information of a power supply route and driving time for the vehicle to be charged to drive along the power supply route to each energy storage apparatus for power supply based on the current location of the vehicle to be charged and the power supply location of each energy storage apparatus for power supply; and
determining the target energy storage apparatus from among the at least two energy storage apparatuses for power supply by combining the power supply priority of each energy storage apparatus for power supply, and the driving time and the road condition information of each power supply route for the vehicle to be charged to drive to each energy storage apparatus for power supply.

3. The charging reservation method according to claim 1 or 2, wherein the occupancy situation comprises whether the energy storage apparatus for power supply is currently occupied and an available charging reservation moment of each energy storage apparatus for power supply when it is currently occupied; and the selection priorities of the energy storage apparatuses for power supply decrease sequentially in the order of ultra-fast charging, fast charging, and slow charging; and
the in-vehicle system determining a power supply priority of each energy storage apparatus for power supply based on a selection priority and an occupancy situation of each energy storage apparatus for power supply comprises:
determining, in response to the presence of an ultra-fast charging energy storage apparatus for power supply among the at least two energy storage apparatuses for power supply and the ultra-fast charging energy storage apparatus for power supply being currently unoccupied, a power supply priority of the ultra-fast charging energy storage apparatus for power supply as level one;
determining, in response to the presence of an ultra-fast charging energy storage apparatus for power supply among the at least two energy storage apparatuses for power supply and the ultra-fast charging energy storage apparatus for power supply being currently occupied, a driving moment when the vehicle to be charged reaches the ultra-fast charging energy storage apparatus for power supply based on a power supply location of the ultra-fast charging energy storage apparatus for power supply; and
determining, in response to the driving moment being greater than the available charging reservation moment, a power supply priority of the ultra-fast charging energy storage apparatus for power supply as level one.

4. The charging reservation method according to claim 3, further comprising:
in response to the absence of an ultra-fast charging energy storage apparatus for power supply among the at least two energy storage apparatuses for power supply, determining a power supply priority of a currently unoccupied fast charging energy storage apparatus for power supply as level two, and determining a power supply priority of a currently unoccupied slow charging energy storage apparatus for power supply as level three.

5. The charging reservation method according to claim 2, wherein the determining the target energy storage apparatus from among the at least two energy storage apparatuses for power supply by combining the power supply priority of each energy storage apparatus for power supply, and the driving time and the road condition information of each power supply route for the vehicle to be charged to drive to each energy storage apparatus for power supply comprises:
comparing, in response to the presence of not less than two energy storage apparatuses for power supply with a power supply priority of level one among the at least two energy storage apparatuses for power supply, drivable time of the vehicle to be charged with driving time for the vehicle to be charged to drive to the energy storage apparatuses for power supply having a power supply priority of level one to obtain a comparison result;
determining, in response to the comparison result indicating the presence of at least two energy storage apparatuses for power supply with a power supply priority of level one that have driving time less than the drivable time, an energy storage apparatus for power supply with a power supply priority of level one that has the shortest driving time as the target energy storage apparatus, in conjunction with the road condition information; and
determining, in response to the presence of one energy storage apparatus for power supply with a power supply priority of level one among the at least two energy storage apparatuses for power supply, and driving time for the vehicle to be charged to drive to the energy storage apparatus for power supply with a power supply priority of level one being less than the drivable time, the energy storage apparatus for power supply with a power supply priority of level one as the target energy storage apparatus.

6. The charging reservation method according to claim 5, further comprising:
determining, in response to the presence of one energy storage apparatus for power supply with a power supply priority of level one among the at least two energy storage apparatuses for power supply, and driving time for the vehicle to be charged to drive to the energy storage apparatus for power supply with a power supply priority of level one being greater than the drivable time, whether there exists an energy storage apparatus with a power supply priority of level two among the at least two energy storage apparatuses for power supply; and
determining, in response to the presence of energy storage apparatuses for power supply with a power supply priority of level two among the at least two energy storage apparatuses for power supply, the target energy storage apparatus from among the energy storage apparatuses with a power supply priority of level two based on road condition information of a power supply route and driving time for the vehicle to be charged to drive along the power supply route to the energy storage apparatuses with a power supply priority of level two.

7. The charging reservation method according to any one of claims 1 to 6, further comprising:
the in-vehicle system sending a data request to the cloud platform, wherein the data request comprises the current location and a remaining range of the vehicle to be charged, the remaining range being determined by a battery management system of the vehicle to be charged; and
the cloud platform, in response to the data request, determining at least two energy storage apparatuses located within a preset range from the current location from the plurality of energy storage apparatuses as the energy storage apparatuses for power supply, wherein the preset range is less than the remaining range.

8. The charging reservation method according to any one of claims 1 to 6, wherein the energy storage apparatus comprises an energy storage module, and the charging reservation information comprises a reservation moment and charging duration for the vehicle to be charged, the charging reservation method further comprising:
the target energy storage apparatus charging the energy storage module in response to the charging reservation information; and
correspondingly, updating current reservation status corresponding to the target energy storage apparatus comprises:
updating, based on the reservation moment and the charging duration, reservation status of a corresponding time period in the current reservation status to obtain updated current reservation status.

9. The charging reservation method according to any one of claims 1 to 6, further comprising:
in response to a situation where the number of times a vehicle has made charging reservations for the target energy storage apparatus exceeds a preset number of times but has not proceeded with charging, starting from the time when the vehicle has not proceeded with charging more than the preset number of times, the cloud platform resuming accepting data requests from the vehicle after a preset time period, and providing the vehicle with at least two energy storage apparatuses for power supply based on a current location of the vehicle.

10. A charging reservation system, comprising:
an in-vehicle system of a vehicle to be charged, configured to, in response to a charging request, acquire at least two energy storage apparatuses for power supply, which meet a charging condition, and power supply status of each energy storage apparatus for power supply, wherein the power supply status comprises current reservation status and a power supply type of each energy storage apparatus for power supply, the power supply type comprising ultra-fast charging, fast charging, and slow charging, with energy storage apparatuses for power supply corresponding to different power supply types having different selection priorities; and
a cloud platform configured to determine at least two energy storage apparatuses for power supply from among a plurality of energy storage apparatuses connected to the cloud platform based on a current location of the vehicle to be charged; wherein
the in-vehicle system is configured to determine a power supply priority of each energy storage apparatus for power supply based on a selection priority and an occupancy situation of each energy storage apparatus for power supply, wherein the occupancy situation is determined based on the current reservation status of each energy storage apparatus for power supply;
the in-vehicle system is further configured to determine a target energy storage apparatus from among the at least two energy storage apparatuses for power supply based on the power supply priority and driving information for the vehicle to be charged to drive to each energy storage apparatus for power supply, and send charging reservation information to the target energy storage apparatus; and
the target energy storage apparatus is configured to, in response to the charging reservation information, update current reservation status corresponding to the target energy storage apparatus to establish a charging reservation for the vehicle to be charged.
